(19) Europäisches Patentamt
European Patent Office
Office européen des brevets

(11) **EP 4 667 312 A1**

(12) **EUROPEAN PATENT APPLICATION**

(43) Date of publication:
**24.12.2025 Bulletin 2025/52**

(21) Application number: **25183251.5**

(22) Date of filing: **17.06.2025**

(51) International Patent Classification (IPC):
***B60W 40/12*** *(2012.01)*

(52) Cooperative Patent Classification (CPC):
**B60W 40/12;** B60W 2520/10; B60W 2520/105;
B60W 2520/14; B60W 2540/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.06.2024 IT 202400013897**

(71) Applicant: **FERRARI S.p.A.**
**41100 Modena (IT)**

(72) Inventors:
• **FLUMERI, Alessandro**
**41100 MODENA (IT)**
• **COSTI, Giordano**
**41100 MODENA (IT)**

(74) Representative: **Studio Torta S.p.A.**
**Via Viotti, 9**
**10121 Torino (IT)**

(54) **SYSTEM AND CORRESPONDING METHOD FOR REAL-TIME CHARACTERISATION OF MOTOR VEHICLE TYRES**

(57) A characterisation system for characterisation (20) of at least one tyre (9) of a motor vehicle (1) is described, having: an update module (20), to determine continuously and in real time, during operation of the motor vehicle (1), updated values of quantities of interest associated with the behaviour of the tyre (9); a storage module (24), operatively coupled to the update module (22) so as to implement a buffer memory (25), for storing the updated values provided as an input by the update module (22); a neural network module (26), to implement a neural network architecture, trained to generate as an output, as a function of the values stored by the storage module (24), characterisation parameters for generation of a model of tyre behaviour (9); and a model generation module (28), operatively coupled to the neural network module (26) so as to generate the tyre model based on the characterisation parameters provided at the output of the neural network module (26).

FIG. 2

## Description

### CROSS-REFERENCE TO RELATED APPLICATIONS

This patent application claims priority from Italian patent application no. 102024000013897 filed on June 18, 2024, the entire disclosure of which is incorporated herein by reference.

### TECHNICAL FIELD

This solution relates to a system and to a corresponding method for real-time characterisation of motor vehicle tyres.

As is well known, recently manufactured motor vehicles are equipped with several electronic control systems, such as Traction Control Systems (TCS), stability control systems (ESP/ESC, Electronic Stability Program/ Electronic Stability Control) or Anti-Lock Braking Systems (ABS).

These electronic control systems base their operation on the real-time detection of a number of quantities associated with vehicle operation, such as speed, acceleration, steering angles and so on.

These quantities are detected by multiple sensors on board the motor vehicle, which provide raw signals that are then subjected to digital processing, for example amplification and filtering, in order to make them available for processing by a motor vehicle control unit (usually known as ECU - Electronic Control Unit).

It is also well known that the characteristics of tyres, which are the contact and force-transmitting elements between the vehicle and the ground, play an important role in defining the drivability performance of the motor vehicle (for example in terms of forward movement and directivity).

To date, the tyre characteristics are generally only partly taken into account by the aforementioned electronic motor vehicle control systems, with a general overview, mainly linked to environmental and vehicle states.

In particular, changed characteristics or operating conditions at the level of the tyres on each axle, for example due to wear or changes in environmental conditions (for example, rain or snow) or operating conditions (for example, road conditions), which can lead to even considerable differences in the behaviour of the tyres and, as a consequence, in the dynamic behaviour of the vehicle, are generally not adequately taken into account when implementing the corresponding control strategies.

### OBJECT OF THE INVENTION

The aim of this solution is in general to provide a system for real-time characterisation of motor vehicle tyres, which can, for example, be used to implement improved control strategies and overcome the limitations of current electronic control systems for the motor vehicle.

In accordance with the aim indicated above, according to this invention a system and a method are provided, as defined in the attached claims.

### BRIEF DESCRIPTION OF THE DRAWINGS

This invention will now be described with reference to the accompanying drawings, which illustrate a non-limiting embodiment thereof, wherein:

- Figure 1 schematically shows a motor vehicle provided with at least one control system operating in real time and with a corresponding characterisation system for motor vehicle tyres;
- Figure 2 shows a rough block diagram of the characterisation system;
- Figures 3-5 show signals associated with the operation of the characterisation system;
- Figure 6 is a schematic representation of a neural network module in the characterisation system;
- Figure 7 is a flow chart of training operations of the neural network; and
- Figures 8-9 show signals associated with the neural network training operations.

### DETAILED DESCRIPTION OF THE EMBODIMENTS

As will be described in detail below, one aspect of this solution involves a real-time estimation of tyre characteristics of a motor vehicle, which allows the implementation of control strategies that also take into account changed structural conditions of the same tyres (for example, due to wear and tear) and/or changed operating conditions (for example, due to weather or road surface conditions).

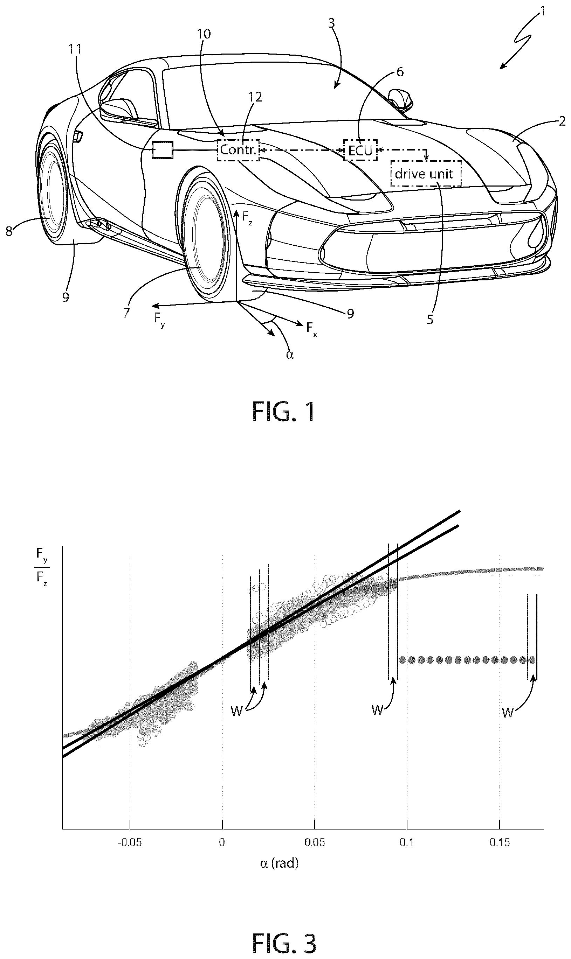

In Figure 1, reference number 1 denotes, as a whole, a motor vehicle comprising a body 2 defining a passenger compartment 3 and housing a drive unit 5, whether thermal, hybrid or only electric, the operation of which is controlled by an electronic control unit 6 (ECU), which also monitors the general operation of the motor vehicle 1 (in a known way, not described in detail here).

The motor vehicle 1 is equipped with two front wheels 7 (thus belonging to a same front axle) and two rear wheels 8 (thus belonging to a same rear axle), at least one of these front or rear axles being designed to receive a drive torque from the drive unit 5 of the motor vehicle 1 to determine its movement. The aforementioned front wheels 7 and rear wheels 8 include respective tyres 9, which define the contact interface between the motor vehicle 1 and the ground.

In particular, Figure 1 shows the main forces generated, in a known manner, by each tyre on the ground, namely, a longitudinal force $F_x$, a lateral force $F_y$ and a vertical force $F_z$ (normal to the contact surface or road surface); the drift angle (so-called "slip angle") is also shown, that is, the angle, denoted by $\alpha$, formed

between a longitudinal axis parallel to the direction of the wheels and the actual trajectory travelled by the motor vehicle 1.

The motor vehicle 1 comprises, as schematically illustrated in Figure 1, at least one control system, denoted by reference number 10, configured to control an on-board vehicle system of the motor vehicle 1, for example, a traction control system (TCS), a stability control system (ESP/ESC), a braking assist system (ABS), or the like.

In general, it is clear that the motor vehicle 1 may be equipped with a plurality of such control systems 10 to manage its operation and to assist the driver of the motor vehicle 1 with the driving functions.

The above-mentioned control system 10 can be implemented, at least in part, by the electronic control unit 6 of the motor vehicle 1.

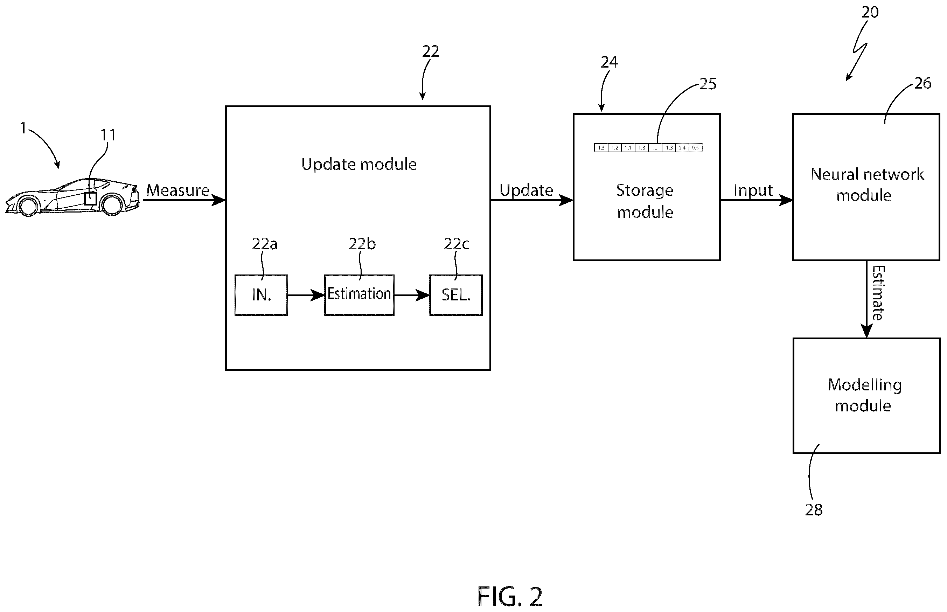

As schematically depicted in Figure 2, the control system 10 comprises at least one sensor 11, arranged on board the motor vehicle 1, configured to detect a quantity of interest for the control action (for example, a speed, an acceleration, an angular steering position, etc.) and to generate at least one sensing signal, indicative of the same quantity. In general, the control system 10 may comprise a plurality of such sensors 11 for detecting corresponding quantities of interest and generating respective sensing signals.

The control system 10 also comprises a processing unit 12, with a microprocessor, microcontroller or similar digital processing unit, configured to implement an appropriate control logic for the above-mentioned automotive system, which involves, among other features, generation of suitable control signals for the automotive system.

This control logic is implemented by appropriate software executed by the processing unit 12 and stored, in the form of programming code, in a non-volatile memory (not shown here) coupled to the processing unit 12; in particular, the processing unit 12, when it executes this software, is configured to implement the above-mentioned control logic.

The processing unit 12 of the control system 10, although shown here schematically separate from the electronic control unit 6 of the motor vehicle 1, may be the same as, or be part of, the same electronic control unit 6.

According to one aspect of this solution, the motor vehicle 1 also comprises a characterisation system, configured so as to implement, when required, a real-time (or near-real-time, in the general sense of a data processing involving a constant flow of inputs and outputs in order to constantly make use of information, in particular while operating or driving the motor vehicle 1) estimate of characteristics of the tyres 9.

In a possible embodiment, this characterisation system may be implemented by the aforementioned control system 10; however, it is evident that the same characterisation system could be implemented by a different, independent control unit of the motor vehicle 1, or by the electronic control unit 6 of the same motor vehicle 1.

As shown in Figure 2, the characterisation system, denoted here with reference number 20, comprises an update module 22, configured so as to determine continuously and in real time, during the operation of the motor vehicle 1, the updated value of a number of quantities of interest associated with the behaviour of the tyres 9.

This update module 22 is configured for this purpose to receive at an input sensing signals from appropriate sensors in the motor vehicle 1 (for example, from the aforementioned sensors 11), process these sensing signals, for example, in order to estimate values of derived quantities (not directly detectable by the same sensors) and discriminate, among the estimated values, those which may be relevant for characterisation of the tyres 9.

Specifically, the update module 22 comprises: an input stage 22a, operatively coupled to the sensors 11 and configured to receive at an input values (for example, in the form of digital samples at a certain sampling frequency) of respective raw (that is, unprocessed) sensing signals; an estimation stage 22b, configured to estimate values of derived quantities from the same sensing signals; and a filtering stage 22c, configured to filter, or discriminate and select, among the estimated or sensed values, values relevant to the characterisation of the tyres 9 and output these values for subsequent processing.

For example, the input stage 22a can be configured to acquire one or more of the following sensing signals: longitudinal speed of the motor vehicle 1; longitudinal accelerations of the motor vehicle 1; yaw rate angles; or steering angles. These sensing signals can be acquired by sensors that may comprise, for example: phonic wheels; Inertial Measuring Units (IMUs); or potentiometers.

The estimation stage 22b is configured to determine (using standard mathematical methods) one or more of these estimated signals: tyre forces; wheel drift angles; or side slip angles, based on the detected signals. In particular (reference may be made again to Figure 1 above), the estimation stage 22b is configured to provide a trend of the lateral force $F_y$, or longitudinal force $F_x$, at the tyres, as a function of the drift angle $\alpha$.

A main role of the filtering stage 22c is to isolate the dynamics to be characterised for the tyres 9, that is, the lateral dynamics or longitudinal dynamics.

The characterisation system 20 is indeed configured to determine the characteristics of the tyres 9 by dividing the characterisation problem into the two characteristic dimensions of dynamics, namely lateral and longitudinal. In particular, when the dynamics to be characterised are lateral dynamics (as in the example that will be illustrated in detail here), the filtering isolates the signal samples of pure lateral dynamics or for which the lateral dynamics are predominant (vice versa in the case of longitudinal dynamics).

The filtering stage 22c can operate by discriminating, instant by instant, whether a new signal sample, acquired or estimated, is to be processed or discarded, for example, by using numerical thresholds calibrated using data from simulation and/or experimental tests.

As an example, the filtering stage 22c can be configured to discard: speed samples indicative of a vehicle speed below 40 km/h (below this speed, the estimated signals are in fact considered unreliable); in the case of lateral dynamics characterisation, samples indicative of a longitudinal force greater than 20% of a maximum applicable force; samples indicative of a longitudinal slip of the wheel greater than 2% (a wheel that is slipping does not in fact apply a reliable force); samples indicative of situations of strong oversteer or understeer (which are also unreliable for the characterisation); samples indicative of forces or other input signals having a zero value (therefore not relevant for characterisation).

The characterisation system 20 also comprises a storage module 24, operatively coupled to the update module 22 and configured to implement a buffer memory 25, for buffering the samples provided as an input by the same update module 22.

In particular, in a possible embodiment, the storage module 24 is configured to store a certain number of average values of the force at the tyres 9 (lateral force, in the case of characterising lateral dynamics, or longitudinal force, in the case of characterising longitudinal dynamics) and a certain number of slope values associated with the trend of the same force with respect to the drift angle.

Referring to Figure 3 as well, in a possible embodiment the force signal, in this case the lateral force $F_y$, acting on a tyre (for example, the left front tyre), normalised with respect to the vertical force or load $F_z$, is divided into a number of intervals or windows W of drift angle, indicated by $\alpha$; the plot shown in this Figure 3 thus represents a trend of the ratio $F_y/F_z$, as a function of the drift angle, indicated by $\alpha$.

Merely by way of example, each window may have a width of 0.3 degrees (0.005 rad) and thirty-one windows may be considered. In general, the number and width of the windows is chosen to cover an adequate range of characterisation in terms of the drift angle $\alpha$, for example, from approximately 0 to a maximum of 15-20 degrees. In the example, the choice of the thirty-one windows with the given width allows for approximately 10 degrees or 0.17 rad, which is an adequate range to characterise the tyre 9 for the majority of its operation.

Within each window, an incremental average of the corresponding signal samples is calculated, resulting in a respective average numeric value, which is updated in real time each time a sample is acquired (or estimated) that falls within the same drift angle window.

The aforementioned storage module 24 is configured to store these average numeric values, in the example thirty-one in number, in the buffer memory 25; in the example illustrated in Figure 3, the first stored element refers to the window starting at about 0.85 degrees (0.015 rad), while the last stored element refers to the window ending at about 10 degrees (0.17 rad).

In addition, the storage module 24 is configured to store in the buffer memory 25, in the example, two additional numeric values referring to the slopes of the force signal (in particular of the aforementioned ratio $F_y/F_z$) in two different angular ranges. A first slope in this example refers to the range from 0 to 1.5 degrees (0.025 rad) of the drift angle $\alpha$; and a second slope refers to the range from 0 to 2.3 degrees (0.040 rad) of the drift angle $\alpha$.

In general, a number of slope values ranging from one to a maximum of 4 or 5 can be stored.

In essence, in the embodiment illustrated (purely by way of example), the storage module 24 is configured to store (and continuously update over time, upon acquisition or estimation of each new sample) a total of thirty-three numeric values; the small storage space required for the implementation of such a storage module 24 is thus evident.

Figure 3 above shows the samples of the received signal (empty dots), the stored mean values (filled dots), the two stored slopes (defined by the respective straight lines) and also a curve interpolating the trend of the aforementioned ratio $F_y/F_z$.

Returning now to Figure 2, the characterisation system 20 also comprises a neural network module 26, which is operatively coupled to the storage module 24 and which receives the data stored in the corresponding buffer memory 25 as an input.

This neural network module 26 is configured to implement a neural network architecture, suitably trained so as to output a number of characterisation parameters that can be used to generate a model of the behaviour of the tyre 9 and a corresponding characterisation curve linking the acting force (for example, the lateral force, in the case of characterisation of lateral dynamics) to the drift angle $\alpha$.

In a possible embodiment, the neural network module 26 is executed when required, that is, when the control system 10 requires knowledge of the updated tyre characteristics for implementing the control strategies. When executed, this neural network module 26 operates on the basis of the data (continuously updated in real time) stored in the aforementioned storage module 24.

In a possible embodiment, this model is based on the following three-parameter relationship:

$$\frac{F_y}{F_z} = G * \sin\left(A * \arctan(B * \alpha)\right)$$

where G is a first parameter, indicative of the grip of the tyre; A is a second parameter, indicative of the form factor after the maximum peak of the trend of the lateral force $F_y$ normalised by the vertical force $F_z$ with respect to the drift angle; and B is a third parameter, indicative of the form factor of the aforementioned trend of the forces generated by the tyre on the ground, prior to the maximum peak (the product of the aforementioned first, second and third parameters $G*A*B$ being indicative of the stiffness of the tyre with respect to the slip, known as "Cornering Stiffness").

It should be noted that, in the above expression, the longitudinal force $F_x$ can evidently be substituted, if characterising the longitudinal dynamics of the tyre 9.

The aforementioned relationship is based on the well-known "Pacejka's formula", in a simplified version thereof, applied to the lateral tyre dynamics; as it is known, the Pacejka model (see, for example, Hans Pacejka, "Tire and vehicle dynamics", Elsevier, 2005) is widely used in studies of vehicle dynamics and is based on a semi-empirical tyre model for calculating forces and moments acting on the tyre.

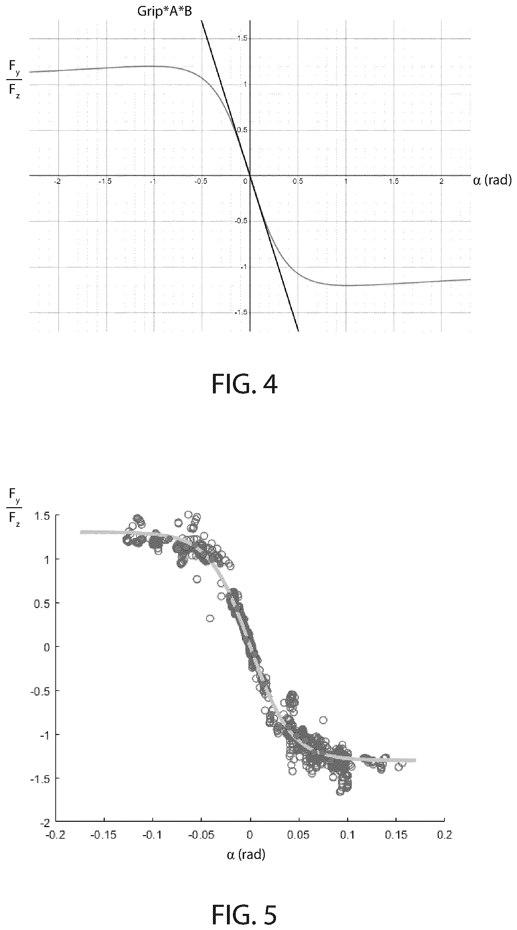

Figure 4 shows a graphical representation of the aforementioned model and, in particular, a corresponding characteristic curve describing the trend in the ratio $F_y/F_z$ with the drift angle $\alpha$.

Returning to Figure 2 above, the characterisation system 20 further comprises a model generation or modelling module 28, operatively coupled to the neural network module 26 and configured to generate a model of the tyre 9 and its characteristic curve (describing the force trend with respect to the drift angle $\alpha$) on the basis of the characterisation parameters provided at the output of the same neural network module 26.

In this regard, Figure 5 shows the aforementioned characteristic curve of the model, in this case illustrating the trend of the aforementioned ratio $F_y/F_z$ as a function of the drift angle $\alpha$. In this representation too, the empty dots indicate the received signal samples, the full dots the stored average values; the curve interpolating the trend of the above-mentioned ratio $F_y/F_z$ is shown as a continuous line.

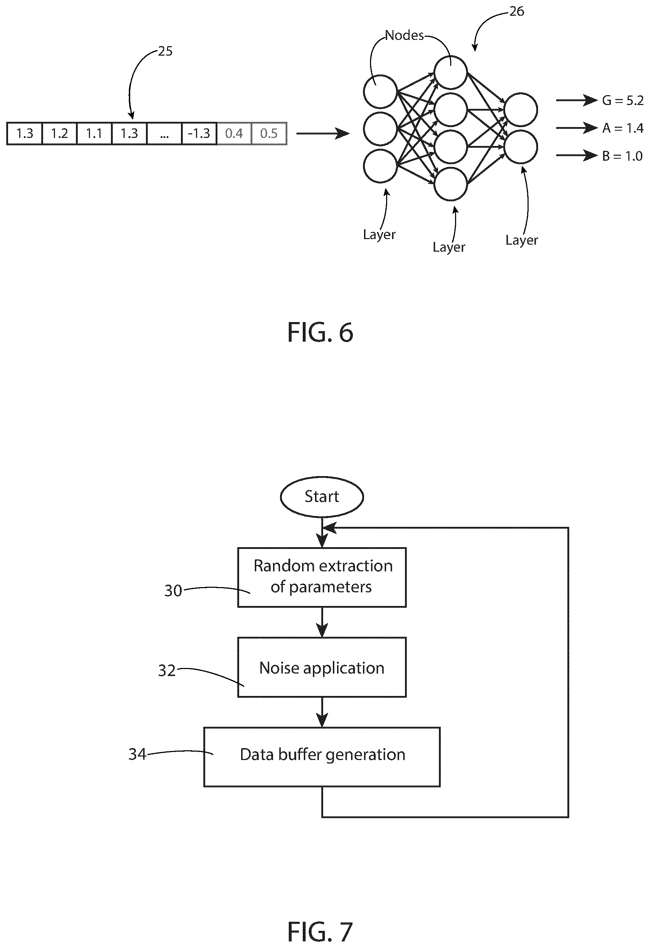

Figure 6 schematically shows the neural network architecture implemented by the neural network module 26, which receives at the input the values stored in the memory buffer 25 and outputs the values of the parameters G, A and B.

Specifically, this neural network architecture can be implemented using different types of networks, for example "Fully Connected", recurrent (for example, LSTM - Long Short Term Memory), convolutional, or "Transformers".

The number of layers of the neural network architecture may vary from one to a maximum of ten; the number of neurons per single layer may vary from one to a maximum of one hundred and twenty-eight; the number of total parameters may vary from ten to a maximum of one million.

In general, a "large" network will lead to better results but, at the same time, will be slower and more complex to execute; the actual number of layers and neurons is therefore chosen appropriately to achieve a desired trade-off between execution speed and implementation complexity.

In a possible embodiment, the neural network architecture used is of the "Fully Connected" type, with a total number of parameters of eight hundred, divided into four layers: a first layer, layer1, with fourteen neurons (shared); a second layer, layer2, with six neurons (at output); a third layer, layer3, with four neurons (at output); a fourth layer, layer4, with one neuron (at output).

This example may apply to the case discussed above in which the neural network receives at the input thirty-three numeric values from the storage module 24 and outputs three numbers, corresponding to the characterisation parameters for generating the model by the model generation module 28.

The neural network implemented by the neural network module 26 is trained prior to the use of the characterisation system 20 in the control system 10 of the automotive system 1.

According to an aspect of the present solution, such training can be performed using a synthetic, that is, entirely artificially constructed, dataset without the use of real data (from the motor vehicle 1).

As shown schematically in Figure 7, the training of the neural network involves an initial phase, indicated by 30, of randomly extracting values of the characterisation parameters G, A and B in an assigned range of values (for example, compatible with the automotive application for which the system is intended); these randomly generated values determine a respective tyre model and, in particular, the truth or target to be predicted by the neural network.

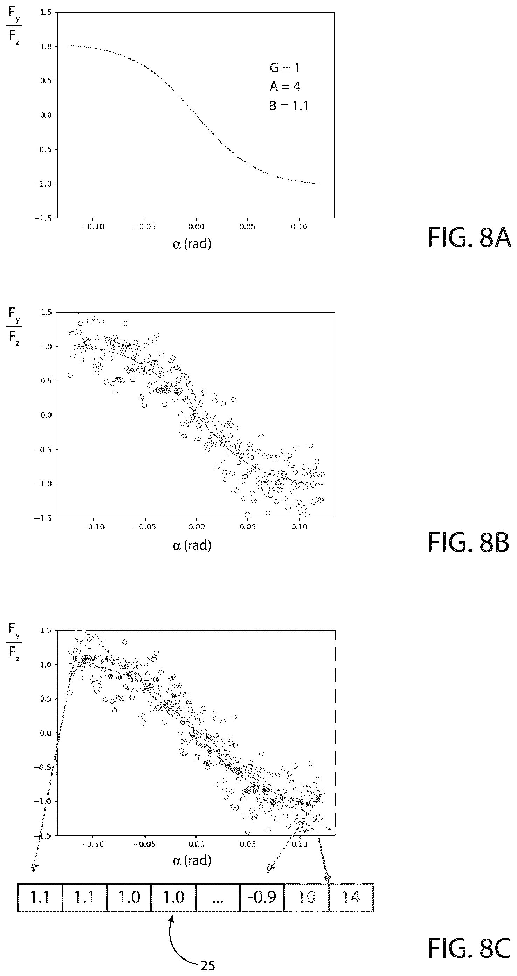

By way of example, Figure 8A shows the tyre model (defined by the curve of the ratio $F_y/F_z$ as a function of the drift angle $\alpha$) in the case where the above-mentioned random extraction step results in the following characterisation parameter values: G=1; B=4; A=1.1 (of course, these numerical values are purely illustrative).

The training procedure then involves, step 32, the application of an appropriate noise to the model determined in the previous step, to generate multiple training signal samples; these samples, which are shown with an empty dot in Figure 8B, are randomly distributed around the curve that defines the trend of the model.

According to an aspect of the present solution, noise generation is performed on the basis of the errors that can actually be measured between the estimated forces and the forces measured by the sensors (for example, dynamometric wheels) on board the motor vehicle 1, so that the noise generated is meaningful and compatible with a real case scenario.

In the next step 34, the data buffer is then generated, to be stored in the storage module 24, in a manner corresponding to what discussed above, with the calculation of incremental averages and slope values (as illustrated in Figure 8C, by way of example); in addition, the annotations ("Label") are defined for the creation of the "Groundtruth", that is, the set of truth values to be compared with the model predictions.

The above-described procedure can be repeated a sufficient number of times to create a sufficiently complete dataset that can cover all cases that may arise in the real scenario; for example, two hundred thousand values can be generated to populate the aforementioned synthetic dataset.

The dataset generated is appropriately divided into a training dataset and a validation dataset, which can be used for testing or validating the neural network (thus being excluded from training).

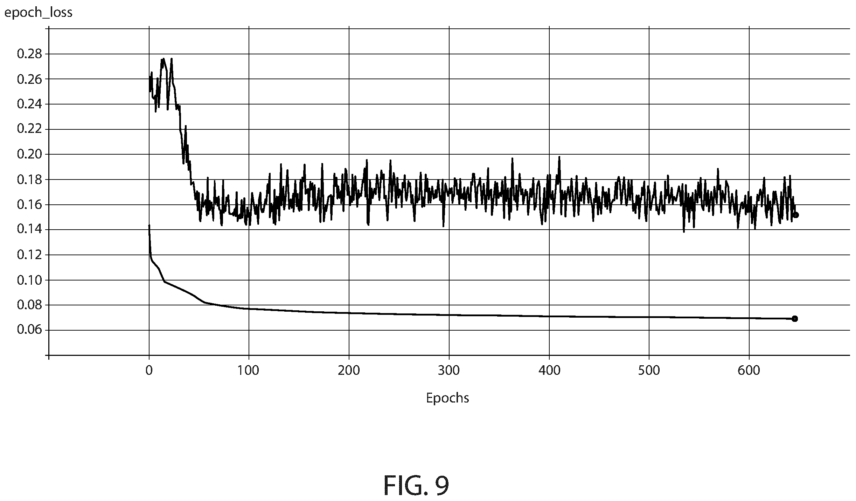

In this respect, Figure 9 shows a possible execution of the training procedure, considering the above example of a synthetic or artificially generated dataset. As can be seen from the graph of the epoch loss function, it is possible to obtain optimal training for the neural network, in the example approximately from the 100th epoch onwards.

The advantages that this solution allows to achieve are clear from what has been discussed.

In particular, the solution described provides a characterisation system for motor vehicle tyres, which can be executed in real or near-real time and thus can be used for implementing control systems within the motor vehicle, for the real-time control of at least one respective motor vehicle system.

In particular, the characterisation system allows to obtain detailed information regarding the type and characterisation of the tyre by axle of the motor vehicle, so that any changes in tyre characteristics, for example due to relative wear or changed environmental or road conditions, are also appropriately taken into account.

The solution described is also simple and inexpensive to implement, as it does not generally require any modifications to the hardware of the motor vehicle 1.

Lastly, it is clear that modifications and variations may be made to that described herein without departing from the scope of the present invention, as defined in the attached claims.

In particular, it should be noted that what has been described applies in a similar manner to both the characterisation of lateral dynamics and longitudinal dynamics of the tyres and also applies to all the tyres of the motor vehicle (in particular, to front axle tyres and, in a specific and differentiated manner, to rear axle tyres) .

In addition, different types of neurons, or neural network blocks, can be provided in the neural network architecture implemented by the neural network module 26 of the characterisation system 20. For example, as mentioned above, different numbers of intermediate layers can be provided in the neural network architecture and/or different numbers of neural network blocks in each of the same intermediate layers.

With regard to the training mode of the neural network, real sensing signals, acquired by bench tests or during the actual use of the motor vehicle 1, could also be used, instead of synthetic, artificially generated data.

In addition, the use of different and/or additional parameters in the tyre model generated by the model generation module 28, as well as more complex expressions of the Pacejka formula used in the same model, may be envisaged.

It should also be noted that the characterisation system described can also be advantageously applied, in general, to simulation systems for simulating the motor vehicle behaviour.

**Claims**

1. A characterisation system (20) for characterisation of at least one tyre (9) of a motor vehicle (1), comprising:

   an update module (20), configured to determine continuously and in real time, during operation of the motor vehicle (1), updated values of quantities of interest associated with the behaviour of the tyre (9);
   a storage module (24), operatively coupled to the update module (22) and configured to implement a buffer memory (25), for storing the updated values provided as an input by the update module (22);
   a neural network module (26), configured to implement a neural network architecture, trained to generate as an output, as a function of the values stored by the storage module (24), characterisation parameters for generation of a model of tyre behaviour (9); and
   a model generation module (28), operatively coupled to the neural network module (26) and configured to generate the tyre model based on the characterisation parameters provided at the output of the neural network module (26).

2. The characterisation system according to claim 1, wherein said update module (22) is configured to determine updated values associated with a trend of at least one force generated by the tyre (9) as a function of a drift angle ($\alpha$) associated with the tyre (9); and wherein said model generation module (28) is configured to generate the tyre model, describing a trend of said force with respect to the drift angle ($\alpha$) by means of a corresponding characteristic curve.

3. The characterisation system according to claim 2, wherein said storage module (24) is configured to store a number of average values of said force in respective intervals or windows of said drift angle ($\alpha$) and a number of slope values associated with respective portions of the trend of said force with respect to the drift angle ($\alpha$); wherein said force is a lateral force, in the case of characterisation of a lateral dynamic of said tyre (9), or a longitudinal force, in the case of characterisation of a longitudinal dynamic of said tyre (9).

4. The characterisation system according to claim 3, wherein said update module (22) is configured to: receive sensing signals from one or more sensors (11) on board the motor vehicle (1); process said sensing signals, in order to estimate the updated values of said force; and discriminate, among said updated values, values relevant for characterisation of the lateral or longitudinal dynamics of said tyre (9), for storage by the storage module (24).

5. The characterisation system according to any of the preceding claims, wherein said model of tyre behaviour (9) is based on the following three-parameter relationship:

$$\frac{F}{F_z} = G * \sin \left( A * \arctan(B * \alpha) \right)$$

where F is a lateral or longitudinal force generated by the tyre (9); $F_z$ is a vertical force; $\alpha$ is the drift angle; G is a first parameter indicative of grip of the tyre (9); A is a second parameter, indicative of a form factor after a maximum peak of the trend of the force F normalized for the vertical force $F_z$ with respect to the drift angle $\alpha$; and B is a third parameter, indicative of the form factor of said trend, before the maximum peak.

6. The characterisation system according to any of the preceding claims, wherein said model of tyre behaviour (9) is based on Pacejka's formula.

7. The characterisation system according to any of the preceding claims, wherein said neural network module (26) is designed to be trained using an artificial data set, artificially generated by: random assignment of values to the characterisation parameters; generation of the tyre model based on the assigned values; application of noise to the model; generation of the updated values for storage in the buffer memory (25); definition of annotations and truth values to be compared with predictions of the neural network.

8. The characterisation system according to any of the preceding claims, wherein the neural network architecture implemented by the neural network module (26) comprises: a number of layers between one and ten; a number of neurons per single layer between one and one hundred and twenty-eight; and a number of total parameters between ten and one million; and wherein each layer is implemented by means of a type chosen from: "Fully Connected"; recurrent; convolutional; and "Transformers" networks.

9. A control system (10) for automotive applications, comprising a characterisation system (10) according to any one of the preceding claims.

10. The control system according to claim 9, comprising a control unit (12), configured to determine execution of said neural network module (26) whenever said control system (10) requires, for implementation of a related control strategy, knowledge of updated tyre characteristics (9).

11. The control system according to claim 10, wherein said control system is one among a traction control system, a stability control system, an anti-lock braking system of the motor vehicle (1).

12. A motor vehicle (1), comprising the control system (10) according to any one of claims 9-11.

13. An automotive control software storable in, and executable by, electronic processing resources (12) and designed to cause, when executed, the electronic processing resources (12) to become configured to implement the control system according to any one of claims 9-11.

14. A characterisation method for characterisation of at least one tyre (9) of a motor vehicle (1), comprising:

   determining continuously and in real time, during operation of the motor vehicle (1), updated values of quantities of interest associated with the behaviour of the tyre (9);
   storing in a buffer memory (25) said updated values;
   implementing a neural network architecture, trained to generate as an output, based on the values stored in the buffer memory (25), characterisation parameters, for generation of a model of the tyre behaviour (9); and
   generating the tyre model based on the characterisation parameters provided as an output by the neural network architecture.

15. A control method (10) for automotive applications, comprising controlling an automotive system based on the tyre model obtained by the characterisation method according to claim 14.

FIG. 1

FIG. 3

FIG. 2

EP 4 667 312 A1

# FIG. 4

# FIG. 5

FIG. 6

FIG. 7

$\frac{F_y}{F_z}$

G = 1
A = 4
B = 1.1

α (rad)

FIG. 8A

$\frac{F_y}{F_z}$

α (rad)

FIG. 8B

$\frac{F_y}{F_z}$

α (rad)

| 1.1 | 1.1 | 1.0 | 1.0 | ... | -0.9 | 10 | 14 |

25

FIG. 8C

FIG. 9

## EP 4 667 312 A1

**EUROPEAN SEARCH REPORT**

Application Number

EP 25 18 3251

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/174079 A1 (SUBRAMANIAN CHIDAMBARAM [US]) 8 June 2023 (2023-06-08) | 1,2,5-15 | INV. B60W40/12 |
| A | * paragraphs [0004], [0050] - [0060], [0102] * | 3,4 | |
| | ----- | | |
| X | CN 116 560 223 A (UNIV JIANGSU) 8 August 2023 (2023-08-08) | 1,2,5-15 | |
| A | * paragraphs [0004] - [0055]; figures 1-4 * | 3,4 | |
| | ----- | | |
| A | CN 114 537 346 A (UNIV QINGHUA) 27 May 2022 (2022-05-27) * the whole document * ----- | 3,4 | |

| | | | TECHNICAL FIELDS SEARCHED (IPC) |
|---|---|---|---|
| | | | B60W |

The present search report has been drawn up for all claims

| Place of search | Date of completion of the search | Examiner |
|---|---|---|
| Munich | 13 November 2025 | Stolle, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 3251

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2025

| Patent document cited in search report | | Publication date | Patent family member(s) | | Publication date |
|---|---|---|---|---|---|
| US 2023174079 A1 | | 08-06-2023 | CN | 116215559 A | 06-06-2023 |
| | | | EP | 4190598 A1 | 07-06-2023 |
| | | | US | 2023174079 A1 | 08-06-2023 |
| CN 116560223 A | | 08-08-2023 | NONE | | |
| CN 114537346 A | | 27-05-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• IT 102024000013897

**Non-patent literature cited in the description**

• Tire and vehicle dynamics. Hans Pacejka. Elsevier, 2005